# EUROPEAN PATENT SPECIFICATION

(11) **EP 4 293 223 B1**
(45) Date of publication and mention of the grant of the patent: **11.11.2026**
(21) Application number: 23178991.8
(22) Date of filing: 13.06.2023
(51) Int. Cl.: F04B 19/00, F04B 39/00, F04B 39/02, F04B 39/12

(54) **RECIPROCATING COMPRESSOR**
HUBKOLBENVERDICHTER
COMPRESSEUR À PISTON

(30) Priority: 15.06.2022 KR 20220072830
(43) Date of publication of application: 20.12.2023
(73) Proprietor: LG Electronics Inc., Yeongdeungpo-gu Seoul 07336 (KR)
(72) Inventor: KIM, Younghwan, 08592 Seoul (KR); KIM, Jinkook, 08592 Seoul (KR); KIM, Sangmin, 08592 Seoul (KR)
(74) Representative: Ter Meer und Partner mbB

(56) References cited:
- JP-A- 2010 112 249
- JP-A- 2012 036 905
- KR-A- 20120 037 267
- US-A1- 2011 200 462
- US-A1- 2015 030 478

## Description

### BACKGROUND OF THE INVENTION

### Field of the Invention

A reciprocating compressor, and more particularly, a reciprocating compressor in which a ball bearing assembly is installed between a thrust surface of a cylinder block and a thrust surface of a crankshaft is disclosed herein.

### Description of the Related Art

In general, a hermetic compressor is a compressor that includes a motor that generates power inside of an airtight container and a compression unit that operates by receiving power from the motor.

The hermetic compressor may be classified into a reciprocating type, a rotary type, a vane type, or a scroll type, for example, according to a method of compressing a refrigerant, which is a compressible fluid.

The reciprocating compressor is a type in which a crankshaft is coupled to a rotor of a motor, a connecting rod is coupled to the crankshaft, and a piston coupled to the connecting rod compresses refrigerant while linearly reciprocating inside of a cylinder.

In the reciprocating compressor, a shaft of the crankshaft is inserted into a cylinder block and supported in a radial direction, while an eccentric mass part is placed on the cylinder block and supported in an axial direction as well.

Therefore, as a journal bearing surface and a thrust bearing surface are formed between the crankshaft and the cylinder block, minimizing frictional loss on the journal bearing surface and the thrust bearing surface serves as an important factor in improving energy efficiency of the compressor.

Thus, an oil passage is formed in a conventional crankshaft so that oil pumped from an oil feeder is evenly supplied to each bearing surface through the oil passage.

However, conventional reciprocating compressors have limitations in reducing friction loss as a thrust surface makes surface contact, and considering this, a method of installing a separate bearing like a ball bearing assembly (hereinafter, "ball bearing") is known so that the thrust surface may make point contact.

An example of the ball bearing is disclosed in U.S. Pat. No. 10,371,134 B2 (hereinafter, "related art").

The ball bearing disclosed in the related art includes a structure in which a track groove is formed in a washer to limit displacement of the washer in a radial direction.

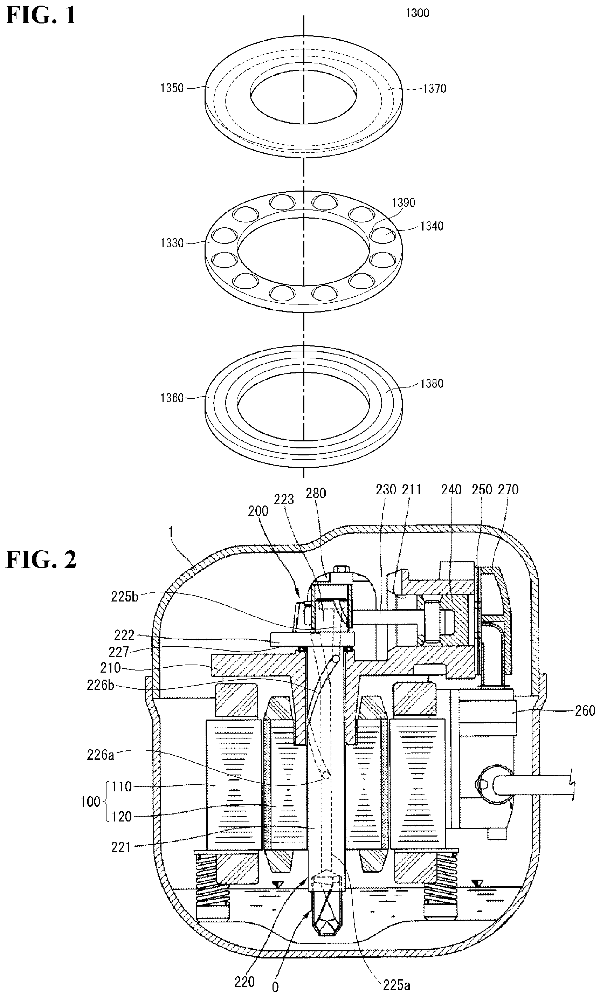

Referring to FIG. 1, a thrust surface is formed so that a ball bearing 1300 to support the crankshaft in an axial direction is placed around an upper end of a shaft hole formed in the cylinder block and into which the shaft of the crankshaft is inserted.

At an edge of the thrust surface, a bearing restraining part is formed at a predetermined height so that a lower washer (or second washer) 1360 may be supported in the radial direction. In this case, a thrust surface of the crankshaft opposite a thrust surface of the cylinder block may be formed flat

The ball bearing 1300 includes a ball cage 1330 in a ring shape, at least three or more balls 1340 rotatably coupled to a ball insertion hole 1390 of the ball cage 1330 and, washers 1350 and 1360 installed to be in contact with both sides of the halls 1340 in the axial direction

The washers 1350 and 1360 may be divided into an upper washer (or first washer) 1350 and a lower washer (or second washer) 1360 around the ball 1340, and the upper washer 1350 and the lower washer 1360 are installed to be radially supported on the cylinder block and the crankshaft, respectively.

The washers 1350 and 1360 may be formed in a circular ring shape (a disk shape having an opening in a center), respectively, and track grooves 1370 and 1380 are formed on the main surfaces (the surface in contact with the ball) of the washers 1350 and 1360, respectively.

Therefore, as the ball 1340 is positioned in the track grooves 1370 and 1380 of the washers 1350 and 1360, the ball bearing 1300 may stably operate.

According to this configuration, movement of the upper washer 1350 in the radial direction is limited by a gap with the crankshaft, and movement of the ball cage 1330 and the lower washer 1360 in the radial direction is limited by a gap with a journal part of the cylinder block.

In the way, as the crankshaft becomes smaller when the compressor is (ultra) miniaturized, when the existing ball bearing is used as it is, the ball cannot stably support the load transmitted through the crankshaft.

A miniaturized compressor, that is, a micro-compressor compressor may be referred to as a compressor having at least one of a width, depth, and height of 110 mm or less based on a size of an airtight container.

The width and depth may also be referred to as a length in a horizontal direction and a length in a vertical direction.

Therefore, in the case of the micro-compressor, the ball bearing must be made small, but there is a limitation in making the ball bearing small because of the shape and/or structure of the crankshaft and cylinder block.

In addition, the washer is attached to the thrust surface of the crankshaft and the thrust surface of the cylinder block by viscous force, respectively, when the compressor is miniaturized, and at high speed, as a contact area between the washer and the thrust surface decreases, an oil temperature rises and the viscosity decreases, as a result, when a rotational force higher than the viscous force acting on the washer is applied, the washer intermittently rotates with respect to the thrust surface of the cylinder block and/or the thrust surface of the crankshaft, there is a problem in that reliability and performance of the compressor are deteriorated.

That the compressor is operated at high speed means that the operating speed of the compressor is 85 rps or more.

That is, in the case of the micro-compressor, the lower washer to be attached to the thrust surface of the cylinder block may rotate intermittently on the thrust surface of the cylinder block, or the upper washer to be attached to the thrust surface of the crankshaft may intermittently rotate on the thrust surface of the crankshaft.

KR 2012 0037267 A presents an enclosed type compressor that comprises a crank shaft, a frame, a polygon washer, and a stopper. The crank shaft rotates around a shaft direction. The crank shaft passes through the frame. The polygon washer is seated in the frame and a through hole is formed inside of the washer. The crank shaft is inserted into the through hole with a gap. The stopper is formed in the frame. When the polygon washer moves, the stopper supports the polygon washer.

US 2015/030478 A1 presents a sealed compressor that comprises a sealed container which accommodates an electric component and a compression component; wherein the compression component includes a shaft including a main shaft section and an eccentric shaft section, a cylinder block, a piston, and a main bearing unit mounted to the cylinder block and supporting the main shaft section such that the main shaft section is rotatable, a thrust ball bearing mounted to a thrust surface of the main bearing unit; and the thrust ball bearing includes a plurality of balls held in a cage, an upper race having main surfaces one of which is in contact with upper portions of the balls; and a lower race having main surfaces one of which is in contact with lower portions of the balls and; a restricting means for restricting a displacement of the upper race with respect to the shaft.

US 2011/200462 A1 presents a hermetic compressor that includes a thrust ball bearing on the thrust face of the main bearing. The thrust ball bearing includes balls held in a holder, an upper race and a lower race arranged respectively on and beneath the balls, and an elastic support member below the balls.

### SUMMARY OF THE INVENTION

Embodiments disclosed herein provide a reciprocating compressor in which a ball bearing assembly is installed between a thrust surface of a cylinder block and a thrust surface of a crankshaft.

Embodiments disclosed herein further provide a reciprocating compressor in which relative rotation of a washer with respect to a thrust surface of a cylinder block and/or a thrust surface of a crankshaft is impossible.

Embodiments disclosed herein provide a reciprocating compressor in which relative rotation of the washer with respect to the thrust surface of the cylinder block and/or the thrust surface of the crankshaft is impossible even if a rotational force higher than a viscous force acting on the washer is applied because the viscosity of the oil is lowered.

Embodiments disclosed herein also provide a reciprocating compressor having a ball bearing so that the ball may stably rotate on the washer and a uniform force is applied to the ball.

Technical problems to be achieved by embodiments disclosed here are not limited to the technical problems discussed above, and other technical problem which are not mentioned above may be clearly understood from the description by those skilled in the art to which the embodiments pertains.

The object is solved by the features of the independent claims. Preferred embodiments are given in the dependent claims.

In one aspect a reciprocating compressor is provided comprising: an airtight container in which an airtight space is formed; a motor having a stator and a rotor and installed inside of the airtight container to generate rotational force; and a compression unit installed inside the airtight container to compress refrigerant by the rotational force of the motor. The compression unit includes a crankshaft having a shaft coupled to the rotor and inserted into a shaft hole of a cylinder block, an eccentric mass formed eccentrically at an end of the shaft, and a pin that is formed eccentrically with respect to the shaft on a surface of the eccentric mass and rotates eccentrically about the shaft; a connecting rod rotatably coupled to the pin to convert rotational motion into linear motion; a piston rotatably coupled to the connecting rod and configured to compress the refrigerant while reciprocating in a straight line; and a ball bearing positioned between the cylinder block and the crankshaft, wherein the ball bearing includes a ball cage; a plurality of balls rotatably coupled to the ball cage; and at least one washer positioned at least one of between the cylinder block and the plurality of balls and/or between the crankshaft and the plurality of balls.

A rotation preventing portion is provided configured to limit rotation of the at least one washer with respect to the cylinder block and/or the crankshaft.

A reciprocating compressor according to embodiments disclosed herein may include a ball bearing positioned between a thrust surface of a cylinder block and a thrust surface of a crankshaft.

The ball bearing may include a ball cage in a ring shape, a plurality of balls rotatably coupled to the ball cage, a washer positioned at least one of between the thrust surface of the cylinder block and the balls and between the thrust surface of the crankshaft and the balls, and a rotation preventing part of portion that limits rotation of the washer with respect to the corresponding thrust surface.

According to the reciprocating compressor having the rotation preventing part, as the relative rotation of the washer with respect to the thrust surface of the cylinder block and/or the thrust surface of the crankshaft is restrained even if a rotational force higher than a viscous force acting on the washer is applied because the viscosity of the oil is lowered, it is possible to eliminate the problem of deterioration of reliability and performance of the compressor.

In one or more embodiments, the washer may include a lower washer positioned between the thrust surface of the cylinder block and the balls.

In one or more embodiments, the washer may include an upper washer positioned between the thrust surface of the crankshaft and the balls.

In one or more embodiments, the washer may include an upper washer and a lower washer.

In one or more embodiments, the compression unit installed on an upper side of the motor to compress refrigerant by a rotational force of the motor may further include a bearing restraining part or portion which is formed around the shaft hole into which the shaft of the crankshaft is inserted in the thrust surface of the cylinder block and coupled to the lower washer.

When the lower washer is coupled to the bearing restraining part, the radial movement of the lower washer may be restricted.

In one or more embodiments, the ball bearing may include a lower washer rotation preventing part or portion that limits rotation of the lower washer on the thrust surface of the cylinder block.

For example, the lower washer rotation preventing part may include at least one straight line part or portion formed on an outer circumferential surface of the lower washer and at least one straight line part or portion formed on an inner circumferential surface of the bearing restraining part and facing the at least one straight line part of the lower washer.

In one or more embodiments, a remaining portion of the outer circumferential surface of the lower washer, except for the at least one straight line part, may be formed in a circular shape, and a remaining portion of the inner circumferential surface of the bearing restraining part, except for the at least one straight line part, may be formed in a circular shape.

According to this configuration, by coupling the lower washer to the bearing restraining part so that the at least one straight line part formed on the outer circumferential surface of the lower washer faces the at least one straight line part formed on the inner circumferential surface of the bearing restraining part, it is possible to restrain or prevent the lower washer from rotating with respect to the thrust surface of the cylinder block inside the bearing restraining part.

In one or more embodiments, the lower washer rotation preventing part may include a polygonal part or portion formed on the outer circumferential surface of the lower washer and a polygonal part or portion formed on the inner circumferential surface of the bearing restraining part and coupled to the polygonal part of the lower washer.

According to this configuration, by coupling the polygonal part formed on the outer circumferential surface of the lower washer to the polygonal part formed on the inner circumferential surface of the bearing restraining part, it is possible to restrain or prevent the lower washer from rotating with respect to the thrust surface of the cylinder block inside the bearing restraining part.

In one or more embodiments, the lower washer rotation preventing part may include at least one protrusion that protrudes from the outer circumferential surface of the lower washer toward the bearing restraining part, and at least one protrusion insertion groove formed in the bearing restraining part and coupled to each of the protrusions.

According to this configuration, by coupling the protrusion formed on the outer circumferential surface of the lower washer to the protrusion insertion groove formed in the bearing restraining part, it is possible to restrain or prevent the lower washer from rotating with respect to the thrust surface of the cylinder block inside the bearing restraining part.

In one or more embodiments, the protrusion may be fixed to the protrusion insertion groove by, for example, a pin or a screw.

According to this configuration, it is possible to more reliably restrain or prevent the lower washer from rotating with respect to the thrust surface of the cylinder block inside of the bearing restraining part.

In one or more embodiments, a plurality of the protrusions and a plurality of the protrusion insertion grooves may be provided, respectively. The plurality of the protrusions and the plurality of the protrusion insertion grooves may be arranged at equal intervals.

According to this configuration, it is possible to more reliably restrain or prevent the lower washer from rotating with respect to the thrust surface of the cylinder block inside of the bearing restraining part.

In one or more embodiments, the ball bearing may include an upper washer rotation preventing part or portion that limits rotation of the upper washer on the thrust surface of the crankshaft.

In one or more embodiments, the upper washer rotation preventing part may include at least one straight line part or portion formed on an inner circumferential surface of the upper washer and at least one straight line part or portion formed on an outer circumferential surface of the shaft part of the crankshaft and facing the at least one straight line part of the upper washer.

In one or more embodiments, a remaining portion of the inner circumferential surface of the upper washer, except for the at least one straight line part, may be formed in a circular shape, and a remaining portion of the outer circumferential surface of the shaft part of the crankshaft, except for the at least one straight line part, may be formed in a circular shape.

According to this configuration, by coupling the upper washer to the shaft part of the crankshaft so that at least one straight line part formed on the inner circumferential surface of the upper washer faces at least one straight line part formed on the outer circumferential surface of the shaft part of the crankshaft, it is possible to restrain or prevent the upper washer from rotating with respect to the crankshaft on the thrust surface of the crankshaft.

In one or more embodiments, the upper washer rotation preventing part may include a polygonal part or portion formed on an inner circumferential surface of the upper washer and a polygonal part or portion formed on an outer circumferential surface of the shaft of the crankshaft and facing the polygonal part of the upper washer.

According to this configuration, by coupling the polygonal part formed on the inner circumferential surface of the upper washer to the polygonal part formed on the outer circumferential surface of the shaft part of the crankshaft, it is possible to restrain or prevent the upper washer from rotating with respect to the crankshaft on the thrust surface of the crankshaft.

In one or more embodiments, a shortest outer diameter of the thrust surface of the crankshaft may be formed larger than a diameter of a circle connecting centers of the balls.

According to this configuration, the balls may stably rotate on the washer and a uniform force may be applied to the balls.

According to a reciprocating compressor of the embodiments discloses herein, the relative rotation of the washer with respect to the thrust surface of the cylinder block and/or the thrust surface of the crankshaft is impossible.

Therefore, as the relative rotation of the washer with respect to the thrust surface of the cylinder block and/or the thrust surface of the crankshaft is impossible even if a rotational force higher than a viscous force acting on the washer is applied because the viscosity of the oil is lowered, reliability and performance of the compressor may be prevented from deteriorating even in a micro-compressor operating at a high speed of 85 rps or higher with any one of width, depth, and height of 110 mm or less based on the compressor body.

Also, as the shortest outer diameter of the thrust surface of the crankshaft is formed larger than the diameter of a circle connecting the centers of the balls, the balls may stably rotate on the washer and a uniform force is applied to the balls.

Advantages obtainable from embodiments disclosed herein are not limited by the advantages mentioned above, and other advantages which are not mentioned above may be clearly understood from the description by those skilled in the art to which the embodiments pertains.

### BRIEF DESCRIPTION OF THE DRAWINGS

The accompanying drawings, which are included as a part of the detailed description to help the understanding of the present disclosure, provide embodiments of the present disclosure, and together with the detailed description, describe the technical features of the present disclosure.
FIG. 1 is a view for explaining a ball bearing structure of a reciprocating compressor of related art.
FIG. 2 is a schematic diagram of a reciprocating compressor according to an embodiment.
FIG. 3 is a diagram for explaining a structure of a main part of a reciprocating compressor of an embodiment.
FIG. 4 is a view for explaining a ball bearing structure according to an embodiment.
FIG. 5 is a plan view illustrating a state in which a lower washer of FIG. 4 is coupled to a bearing restraining part of a cylinder block.
FIG. 6 is a view for explaining a ball bearing structure according to an another embodiment.
FIG. 7 is a plan view illustrating a state in which a lower washer of FIG. 6 is coupled to a bearing restraining part of a cylinder block.
FIG. 8 is a view for explaining a ball bearing structure according to yet another embodiment.
FIG. 9 is a plan view illustrating a state in which a lower washer of FIG. 8 is coupled to a bearing restraining part of a cylinder block.
FIG. 10 is a cross-sectional view showing a state in which the lower washer of FIG. 8 is coupled to the bearing restraining part of the cylinder block.
FIG. 11 is a view for explaining a ball bearing structure according to still another embodiment.
FIG. 12 is a plan view illustrating a state in which an upper washer of FIG. 11 is coupled to a shaft of a crankshaft.
FIG. 13 is a cross-sectional view showing a state in which an upper washer of FIG. 11 is coupled to a shaft of a crankshaft.
FIG. 14 is a view for explaining a ball bearing structure of a further embodiment of the disclosure.
FIG. 15 is a plan view illustrating a state in which an upper washer of FIG. 14 is coupled to a shaft of a crankshaft.
FIG. 16 is a perspective view of a crankshaft provided in a reciprocating compressor according to an embodiment and a crankshaft provided in a reciprocating compressor of the related art.
FIG. 17 is a diagram comparing a size of a circle connecting a shortest outer diameter of a thrust surface of a crankshaft provided in a reciprocating compressor according to an embodiment and center points of balls.

### DETAILED DESCRIPTION OF THE EMBODIMENTS

Hereinafter, embodiments will be described with reference to the accompanying drawings, however, regardless of the reference numerals, the same or similar components will be given the same reference numerals and redundant description thereof will be omitted.

The suffixes "assembly" and "unit" for elements used in the following description are given or mixed in consideration of only the ease of writing the specification, and do not have distinct meanings or roles by themselves.

In addition, in describing the embodiments, when it is determined that the description of related known technology may obscure the subject matter of the embodiments, detailed description thereof will be omitted.

In addition, the accompanying drawings are only for easily understanding the embodiments.

While terms, such as "first", "second", etc., may be used to describe various elements, such elements must not be limited by the above terms. The above terms are used only to distinguish one element from another.

When an element is referred to as being "coupled" or "connected" to another element, it may be directly coupled to or connected to the other element, however, it should be understood that other elements may exist in the middle.

On the other hand, when an element is referred to as being "directly coupled" or "directly assembled" to another element, it should be understood that there are no other elements in the middle.

The singular forms are intended to include the plural forms as well, unless the context clearly indicates otherwise.

In addition, in embodiments, it should be understood that the terms "comprise" and "have" specify the presence of stated features, integers, steps, operations, elements, parts, or combinations thereof, but do not preclude the presence or addition of one or more other features, integers, steps, operations, elements, parts, or combinations thereof.

Hereinafter, an embodiment according will be described with reference to the accompanying drawings, however, regardless of the reference numerals, the same or similar elements will be given the same reference numerals and redundant description thereof will be omitted.

Hereinafter, a reciprocating compressor according to an embodiment will be described with reference to the accompanying drawings.

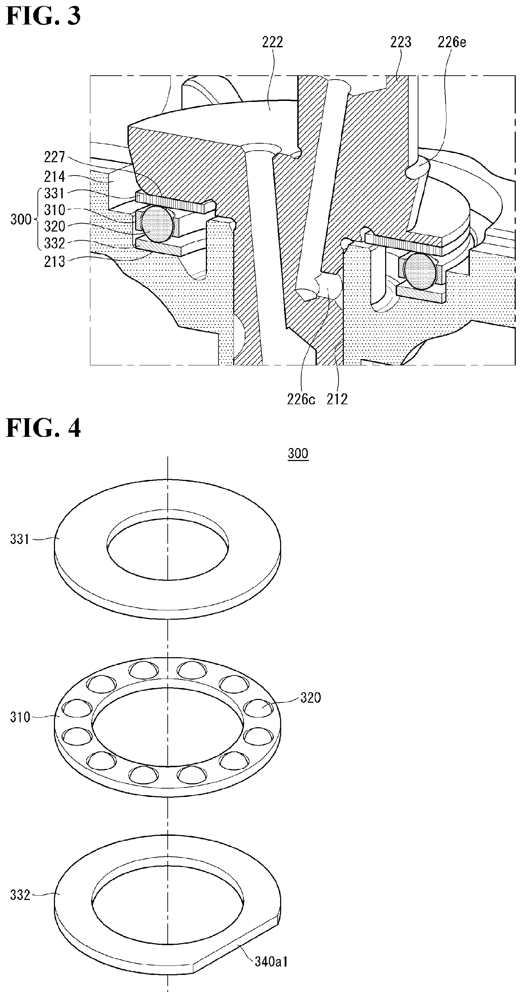

FIG. 2 is a schematic diagram of a reciprocating compressor according to an embodiment. FIG. 3 is a diagram for explaining a structure of a main part of a reciprocating compressor according to an embodiment.

A reciprocating compressor according to an embodiment may includes a motor 100 installed inside of an airtight container 1 to perform a rotational motion and a compression unit 200 that is installed on or at an upper side of the motor 100 and compresses refrigerant by receiving a rotational force of the motor 100.

The motor 100 may be a constant speed motor that rotates only forward, a constant speed motor capable of forward and reverse rotation, or an inverter motor, for example.

The motor 100 may include a stator 110 installed in the cylinder block 210 inside the airtight container 1 and a rotor 120 rotatably installed inside of the stator 110.

The compression unit 200 may include a cylinder block 210 provided with a cylinder 211 to form a compression space and elastically supported by the airtight container 1, a crankshaft 220 inserted into the cylinder block 210 to be supported in radial and axial directions and coupled to the rotor 120 of the motor 100 to transmit the rotational force, a connecting rod 230 rotatably coupled to the crankshaft 220 to convert a rotational motion of the crankshaft 220 into a linear motion, a piston 240 rotatably coupled to the connecting rod 230 to compress the refrigerant while reciprocating in a straight line in the cylinder 211, a valve assembly 250 coupled to a front end of the cylinder block 210 and having a suction valve and a discharge valve, a suction muffler 260 coupled to a suction side of the valve assembly 250, a discharge cover 270 coupled to a discharge side of the valve assembly 250, and a discharge muffler 280 that communicates with the discharge cover 270 to attenuate discharge noise of the refrigerant discharged.

In the reciprocating compressor as described above, when power is applied to the stator 110 of the motor 100, the rotor 120 rotates together with the crankshaft 220 by an interaction force between the stator 110 and the rotor 120, the connecting rod 230 coupled to a pin 223 of the crankshaft 220 performs a pivoting motion, the piston 240 coupled to the connecting rod 230 compresses the refrigerant and discharges it to the discharge cover 270 while reciprocating linearly in the cylinder 211, the refrigerant discharged through the discharge cover 270 passes through the discharge muffler 280, and this series of processes is repeated for a refrigeration cycle.

At the same time, while the crankshaft 220 rotates, an oil feeder O installed at a lower end of the crankshaft 220 pumps the oil stored in a reservoir of the airtight container 1. This oil is suctioned through an oil passage of the crankshaft 220 and supplied to each sliding surface, while some is scattered from an upper end of the crankshaft 220 to cool the motor 100.

Hereinafter, a configuration of the crankshaft for suctioning up oil stored in the oil reservoir of the airtight container 1 is as follows.

That is, as shown in FIGS. 2 and 3, the crankshaft 220 may include a shaft 221 coupled to the rotor 120 and inserted into shaft hole 212 of the cylinder block 210 to be supported by the cylinder block 210 in the radial direction, an eccentric mass 222 formed eccentrically in a scalloped flange shape or eccentric circular flange shape at an upper end of the shaft 221 to form a plate-shaped extension, and pin 223 formed eccentrically with respect to the shaft 221 on an upper surface of the eccentric mass 222 and into which the connecting rod 230 is rotatably inserted.

In the shaft 221, a first journal bearing surface and a second journal bearing surface may be formed on an outer circumferential surface corresponding to the journal bearing surface of the shaft hole 212 at a predetermined interval.

Also, from the lower end to the upper end of the shaft 221, a first oil passage 225a may be formed in an axial direction or slightly inclined in the axial direction, and a second oil passage 225b having a predetermined depth from an upper end of the pin 223 to an upper portion of the shaft 221 is formed in the axial direction.

The first oil passage 225a and the second oil passage 225b may be formed not to communicate with each other.

A first oil outlet hole 226a that guides oil to the second journal bearing surface of the crankshaft 220 may be formed in or at a middle of the first oil passage 225a, that is, a portion corresponding to a lower half of the journal bearing surface of the shaft hole 212, and a first oil groove 226b having a predetermined inclination angle may be spirally formed from the first oil outlet hole 226a to a predetermined height, that is, to an almost end of the shaft hole 212.

In addition, an oil inlet hole 226c that communicates with the second oil passage 225b may be formed at an end of the first oil groove 226b, and a second oil outlet hole that guides oil suctioned through the second oil passage 225b to an outer circumferential surface may be formed in or at a middle of the second oil passage 225b, that is, at a portion coupled to the connecting rod 230.

A second oil groove 226e having a predetermined inclination angle may be spirally formed from the second oil outlet hole to an upper end of the pin 223.

With the configuration as described above, the oil pumped by the oil feeder O is suctioned through the first oil passage 225a, and a portion of the oil may be guided to the first oil groove 226b through the first oil outlet hole 226a.

The oil guided into the first oil groove 226b rides up the first oil groove 226b to sequentially lubricate the second journal bearing surface and the first journal bearing surface of the crankshaft 220.

Next, the oil lubricating the first and second journal bearing surfaces flows into the second oil passage 225b through the oil inlet hole 226c and is suctioned up again, and a portion of this oil flows out from the second oil groove 226e through the second oil outlet hole to lubricate the pin 223 of the crankshaft 220.

The crankshaft is supported in the radial direction as well as in the axial direction while inserted into the shaft hole provided in the cylinder block and rotating. However, as the rotor is coupled to the crankshaft as described above, an axial load increases due to a weight of the crankshaft and the rotor, and friction loss with the cylinder block may be increased by the axial load.

Considering this, it may be considered a method of reducing axial friction loss by installing a point-contact bearing such as a ball bearing between the thrust surface of the cylinder block and the thrust surface of the crankshaft.

Thus, a thrust surface 213 may be formed around an upper end of the shaft hole 212 formed in or at a center of the cylinder block 210 so that the ball bearing 300 that supports the crankshaft 220 in the axial direction is placed on it. At an edge of the thrust surface 213, a bearing restraining part or portion 214 may be formed at a predetermined height so that a lower washer (or second washer) 332 described hereinafter may be supported in the radial direction.

In this case, the thrust surface 227 of the crankshaft 220 opposite the thrust surface 213 of the cylinder block 210 may be formed flat.

The bearing restraining part 214 may be formed in a stepwise manner.

Ball bearing 300 may include a ball cage 310 in a ring shape, at least three or more balls 320 rotatably coupled to the ball cage 310, and washers 331 and 332 installed to be contact with both sides of the balls 320 in the axial direction.

The washer may be installed on only one side of both sides in the axial direction of the balls 320, but as reliability of the compressor may be improved when the washers are installed on both sides of the balls 320 in the axial direction, a case in which washers are installed on both sides of the balls 320 in the axial direction will be described as an example.

A diameter of the balls 320 may be larger than a thickness of the ball cage 310.

The washers 331 and 332 may be divided into an upper washer (or first washer) 331 and a lower washer (or second washer) 332 around the balls 320. The upper washer 331 and the lower washer 332 may be installed to be supported on the cylinder block 210 and the crankshaft 220 in the radial direction, respectively.

That is, while the upper washer 331 is inserted into an outer circumferential surface of the crankshaft 220 together with the ball cage 310 and supported in the radial direction, the lower washer 332 may be installed inside of the bearing restraining part 214 provided on the thrust surface 213 of the cylinder block 210.

The bearing restraining part 214 may be formed around the shaft hole 212 in the thrust surface 213 of the cylinder block 210, and may be coupled so that an outer circumferential surface of the lower washer 332 is in contact with a part or portion of the inner circumferential surface thereof.

As described above, as the ball bearing 300 is installed between the cylinder block 210 and the crankshaft 220, the axial friction loss between the cylinder block 210 and the crankshaft 220 may be significantly reduced, so that the energy efficiency of the compressor may be improved.

In addition, as the ball bearing 300, in particular, the lower washer 332, is radially constrained by the bearing restraining part 214 of the cylinder block 210, the lower washer 332 may always maintain its original position, so that the ball bearing 300 may operate stably.

The upper washer 331 and the lower washer 332 may be made of, for example, heat-treated bearing steel with surface hardness in the range of HRC58 to 68, for example HRC58 to 62.

Also, the ball 320 may be formed to have a surface hardness slightly higher than the surface hardness of the upper washer 331 and the lower washer 332.

More specifically, the ball 320 may be made of, for example, carburized and quenched bearing steel in a manner in which the surface hardness is within a range of HRC60 to 70, for example, within a range of HRC62 to 67.

Therefore, it is possible to restrain or prevent a surface of the ball 320 from peeling in advance, and it is possible to restrain or prevent that a peeled portion wears with the ball 320, the upper washer 331, or the lower washer 332, and damage occurs to the ball 320, the upper washer 331, or the lower washer 332.

Therefore, it is possible to restrain or prevent a decrease in life of the ball bearing 300 and improve the reliability of the ball bearing 300.

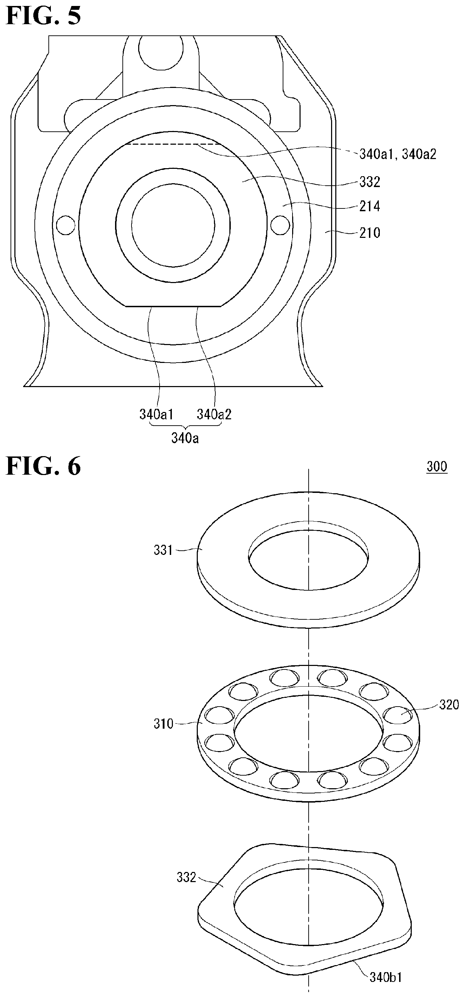

With configuration, a reciprocating compressor according to an embodiment includes a rotation preventing portion that prevents the washer from rotating even intermittently with respect to the corresponding thrust surface
FIG. 4 is a view for explaining a ball bearing structure according to an embodiment, FIG. 5 is a plan view illustrating a state in which a lower washer of FIG. 4 is coupled to a bearing restraining part of a cylinder block.

Referring to the drawings, the ball bearing 300 according to this embodiment may includes a lower washer rotation preventing part or portion 340a that restrains or prevent the lower washer 332 from rotating with respect to the thrust surface 213 of the cylinder block 210.

The lower washer rotation preventing part 340a may include at least one straight line part or portion 340a1 formed on an outer circumferential surface of the lower washer 332, and at least one straight line part or portion 340a2 formed on an inner circumferential surface of the bearing restraining part 214 and facing the at least one straight line part 340a1 of the lower washer 332.

In addition, a remaining portion of the outer circumferential surface of the lower washer 332, except for the at least one straight line part 340a1, may be formed in a circular shape, and a remaining portion of the inner circumferential surface of the bearing restraining part 214, except for the at least one straight line part, may be formed in a circular shape.

According to this configuration, as a distance from a center of the lower washer 332 to the at least one straight line part 340a1 is shorter than a distance from the center of the lower washer 332 to the remaining circular portions, as the lower washer 332 is coupled to the bearing restraining part 214 so that the at least one straight line part 340a1 formed on the outer circumferential surface of the lower washer 332 faces the at least one straight line part 340a2 formed on the inner circumferential surface of the bearing restraining part 214, it is possible to restrain or prevent the lower washer 332 from rotating with respect to the thrust surface 213 of the cylinder block 210 inside of the bearing restraining part 214.

With this configuration, a tiny gap may exist between the outer circumferential surface of the lower washer 332 and the inner circumferential surface of the bearing restraining part 214. Alternatively, the outer circumferential surface of the lower washer 332 and the inner circumferential surface of the bearing restraining part 214 may be in contact with each other.

As shown by the dotted line in the drawing, a plurality of the at least one straight line parts 340a1 and 340a2 may be provided, for example, two or more, respectively. In this case, each of the straight line parts may be disposed at equal intervals on the outer circumferential surface of the lower washer 332 and the inner circumferential surface of the bearing restraining part 214.

For example, when two straight line parts 340a1 and 340a2 are provided, the straight line parts may be formed such that a distance between centers in a longitudinal direction is maintained at 180 degrees. When three straight line parts 340a1 and 340a2 are provided, respectively, the straight line parts may be formed such that a distance between centers in the longitudinal direction is maintained at 120 degrees.

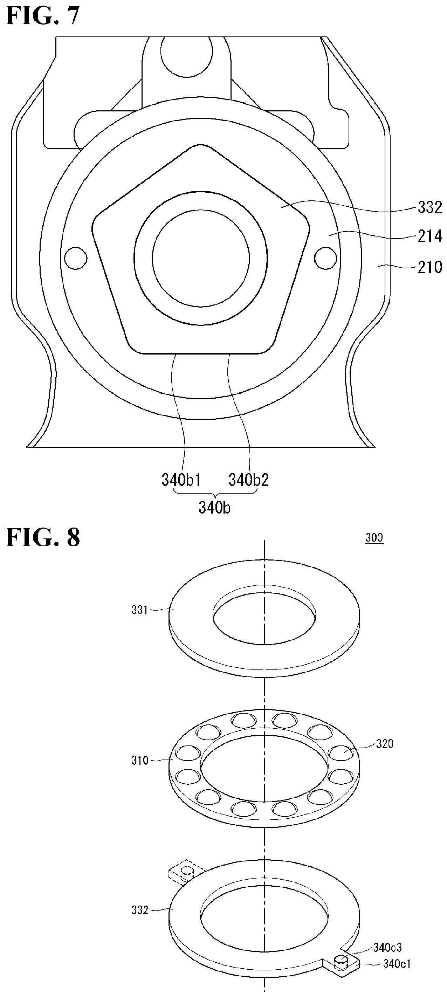

FIG. 6 is a view for explaining a ball bearing structure according to another embodiment. FIG. 7 is a plan view illustrating a state in which a lower washer of FIG. 6 is coupled to a bearing restraining part of a cylinder block.

Lower washer rotation preventing part or portion 340b of this embodiment may include a polygonal part or portion 340b1 formed on the outer circumferential surface of the lower washer 332, and a polygonal part or portion 340b2 formed on the inner circumferential surface of the bearing restraining part 214 and coupled with the polygonal part 340b1 of the lower washer 332.

In FIGS. 6 and 7, the polygonal parts 340b1 and 340b2 are each formed in a pentagonal shape, as an example, but the shape of the polygonal parts 340b1 and 340b2 is not particularly limited as long as the shape can prevent the lower washer 332 from rotating with respect to the thrust surface 213 of the cylinder block 210.

For example, the polygonal parts 340b1 and 340b2 may be variously formed in a quadrangle, a hexagon, a heptagon, or an octagon.

Also, the shapes of the polygonal part 340b1 of the lower washer 332 and the polygonal part 340b2 of the bearing restraining part 214 are not necessarily identical.

With this configuration, a tiny gap may exist between the outer circumferential surface of the lower washer 332 and the inner circumferential surface of the bearing restraining part 214. Alternatively, the outer circumferential surface of the lower washer 332 and the inner circumferential surface of the bearing restraining part 214 may be in contact with each other.

According to this configuration, as the polygonal part 340b1 formed on the outer circumferential surface of the lower washer 332 is coupled to the polygonal part 340b2 formed on the inner circumferential surface of the bearing restraining part 214, it is possible to restrain or prevent the lower washer 332 from rotating with respect to the thrust surface 213 of the cylinder block 210 inside of the bearing restraining part 214.

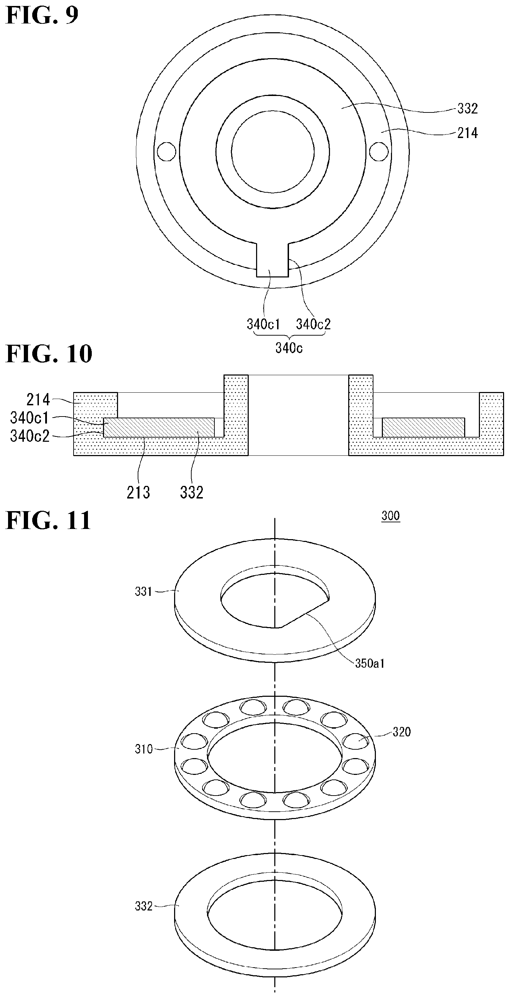

FIG. 8 is a view for explaining a ball bearing structure according to yet another embodiment. FIG. 9 is a plan view illustrating a state in which a lower washer of FIG. 8 is coupled to a bearing restraining part of a cylinder block, and FIG. 10 is a cross-sectional view showing a state in which the lower washer of FIG. 8 is coupled to the bearing restraining part of the cylinder block.

Lower washer rotation preventing part 340c of this embodiment may include at least one protrusion 340c1 that protrudes from the outer circumferential surface of the lower washer 332 toward the bearing restraining part 214, and at least one protrusion insertion groove 340c2 formed in the bearing restraining part 214 and coupled to each of the at least one protrusions 340cl.

With this configuration, a tiny gap may exist between the outer circumferential surface of the lower washer 332 and the inner circumferential surface of the bearing restraining part 214. Alternatively, the outer circumferential surface of the lower washer 332 and the inner circumferential surface of the bearing restraining part 214 may be in contact with each other.

In addition, as shown by the dotted line in the drawing, a plurality of the at least one protrusion 340c1 and the at least one protrusion insertion groove 340c2 may be provided, for example, two or more, respectively. In this case, each of the protrusion 340c1 and each of the protrusion insertion groove 340c2 may be disposed at equal intervals on the outer circumferential surface of the lower washer 332 and the inner circumferential surface of the bearing restraining part 214.

For example, when two protrusions 340c1 and two protrusion insertion grooves 340c2 are provided, the protrusions 340c1 and the protrusion insertion groove 340c2 may be formed to maintain an angle of 180 degrees between the outer circumferential surface of the lower washer 332 and the inner circumferential surface of the bearing restraining part 214, respectively, and when three protrusions 340c1 and three protrusion insertion grooves 340c2 are provided, respectively, the protrusion 340c1 and the protrusion insertion groove 340c2 may be formed to maintain an angle of 120 degrees between the outer circumferential surface of the lower washer 332 and the inner circumferential surface of the bearing restraining part 214, respectively.

With this configuration, as the protrusion 340c1 formed on the outer circumferential surface of the lower washer 332 is coupled to the protrusion insertion groove 340c2 formed in the bearing restraining part 214, it is possible to restrain or prevent the lower washer 332 from rotating with respect to the thrust surface 213 of the cylinder block 210 inside of the bearing restraining part 214.

As shown by the dotted line, the protrusion 340c1 may be fixed to the protrusion insertion groove 340c2 by, for example, a pin 340c3 or a screw.

With this configuration, it is possible to restrain or prevent the lower washer 332 from rotating with respect to the thrust surface 213 of the cylinder block 210 inside of the bearing restraining part 214.

In the above, a case in which the lower washer rotation preventing part is provided has been described, and according to embodiments, it may optionally be provided with the lower washer rotation preventing part.

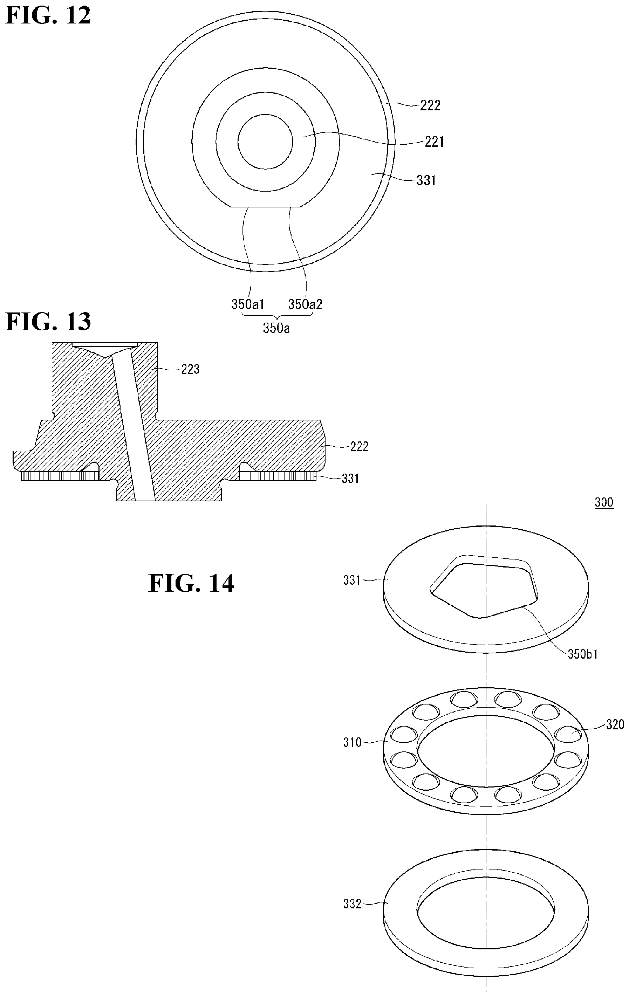

FIG. 11 is a view for explaining a ball bearing structure according to still another embodiment. FIG. 12 is a plan view illustrating a state in which an upper washer of FIG. 11 is coupled to a shaft of a crankshaft, and FIG. 13 is a cross-sectional view showing a state in which the upper washer of FIG. 11 is coupled to the shaft of the crankshaft.

The reciprocating compressor according to embodiments may include upper washer rotation preventing part or portion 350a that restrains or prevents upper washer 331 from rotating on the thrust surface of the crankshaft 220.

The upper washer rotation preventing part 350a of this embodiment may include at least one straight line part or portion 350a1 formed on the inner circumferential surface of the upper washer 331, and at least one straight line part or portion 350a2 formed on an outer circumferential surface of the shaft 221 of the crankshaft 220 and facing the at least one straight line part 350a1 of the upper washer 331.

In addition, a remaining portion of the inner circumferential surface of the upper washer 331, except for the at least one straight line part 350a1, may be formed in a circular shape, and a remaining portion of the outer circumferential surface of the shaft 221 of the crankshaft 220, except for the at least one straight line part 350a2, may be formed in a circular shape.

According to this configuration, as a distance from the center of the upper washer 331 to the at least one straight line part 350a1 is shorter than a distance from the center of the upper washer 331 to the remaining circular portions, as the upper washer 332 is coupled to the shaft 221 so that the at least one straight line part 350a1 formed on the inner circumferential surface of the upper washer 331 faces the at least one straight line part 350a2 formed on the outer circumferential surface of the shaft part 221, it is possible to restrain or prevent the upper washer 331 from rotating with respect to the thrust surface 227 outside of the shaft part 221.

With this configuration, a tiny gap may exist between the inner circumferential surface of the upper washer 331 and the outer circumferential surface of the shaft part 221. Alternatively, the inner circumferential surface of the upper washer 331 and the outer circumferential surface of the shaft part 221 may be in contact with each other.

In addition, a plurality of the at least one straight line parts 350a1 and 350a2 may be provided, for example, two or more, respectively. In this case, each of the straight line parts may be disposed at equal intervals on the inner circumferential surface of the upper washer 331 and the outer circumferential surface of the shaft 221, respectively.

For example, when two straight line parts 350a1 and 350a2 are provided, respectively, the straight line parts may be formed such that a distance between centers in the longitudinal direction is maintained at 180 degrees. When three straight line parts 350a1 and 350a2 are provided, respectively, the straight line parts may be formed such that a distance between centers in the longitudinal direction is maintained at 120 degrees.

According to this configuration, as the upper washer 331 is coupled to the shaft 221 of the crankshaft 220 so that the at least one straight line part 350a1 formed on the inner circumferential surface of the upper washer 331 faces the at least one straight line part 350a2 formed on the outer circumferential surface of the shaft part 221 of the crankshaft 220, it is possible to restrain or prevent the upper washer 331 from rotating with respect to the crankshaft 220 on the thrust surface 227 of the crankshaft 220.

The upper washer rotation preventing part according to embodiments may be provided together with any one lower washer rotation preventing part selected from among the lower washer rotation preventing parts of the previous embodiments described above.

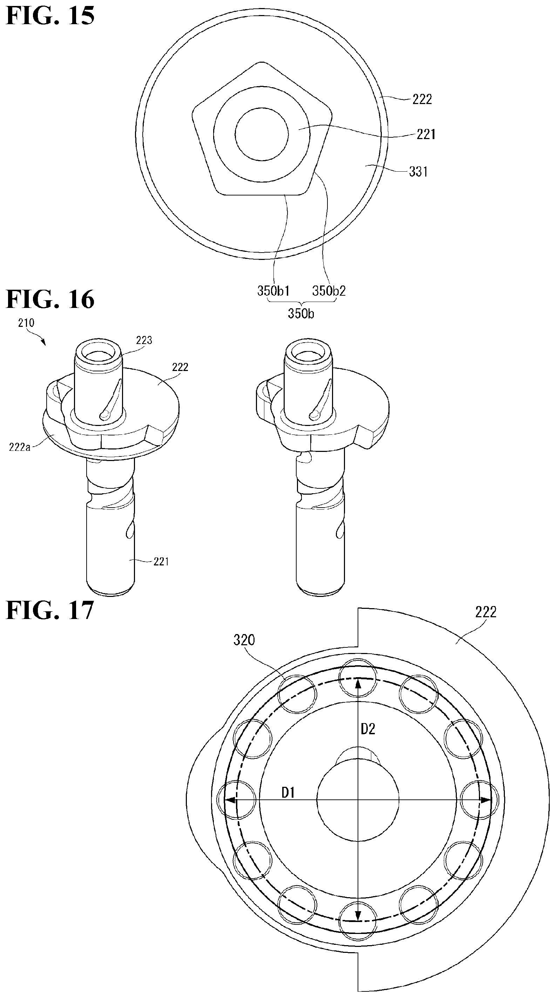

FIG. 14 is a view for explaining a ball bearing structure according to a further embodiment. FIG. 15 is a plan view illustrating a state in which an upper washer of FIG. 14 is coupled to a shaft of a crankshaft.

Upper washer rotation preventing part or portion 350b of this embodiment may include a polygonal part or portion 350b1 formed on the inner circumferential surface of the upper washer 331 and a polygonal part or portion 350b2 formed on the outer circumferential surface of the shaft 221 of the crankshaft 220 and facing the polygonal part 350b1 of the upper washer 331.

In FIGS. 14 and 15, the polygonal parts 350b1 and 350b2 are each formed in a pentagonal shape as an example, but the shape of the polygonal parts 350b1 and 350b2 is not particularly limited as long as the shape can prevent the upper washer 331 from rotating with respect to the thrust surface 227 of the crankshaft 220.

For example, the polygonal parts 350b1 and 350b2 may be formed in various forms such as a quadrangle, a hexagon, a heptagon, or an octagon.

Also, the shapes of the polygonal part 350b1 of the upper washer 331 and the polygonal part 350b2 of the shaft 221 are not necessarily identical.

In this configuration, a tiny gap may exist between the inner circumferential surface of the upper washer 331 and the outer circumferential surface of the shaft part 221. Alternatively, the inner circumferential surface of the upper washer 331 and the outer circumferential surface of the shaft 221 may be contact with each other.

According to this configuration, as the polygonal part 350b1 formed on the inner circumferential surface of the upper washer 331 is coupled to the polygonal part 350b2 formed on the outer circumferential surface of the shaft part 221 of the crankshaft 220, it is possible to restrain or prevent the upper washer 331 from rotating with respect to the thrust surface 227 outside of the shaft part 221.

The upper washer rotation preventing part according to embodiments may be provided with any one of the lower washer rotation preventing part selected from among the lower washer rotation preventing parts of the previous embodiments described above.

FIG. 16 is a perspective view of a crankshaft provided in a reciprocating compressor according to embodiments and a crankshaft provided in a reciprocating compressor according to the related art. What is shown on the left is the crankshaft provided in the reciprocating compressor according to embodiments and what is shown on the right is the crankshaft provided in the reciprocating compressor according to the related art.

FIG. 17 is a diagram comparing a size of a circle connecting a shortest outer diameter of a thrust surface of a crankshaft provided in a reciprocating compressor according to embodiments and center points of balls.

Referring to the drawings, the crankshaft provided in the reciprocating compressor according to embodiments has an extended thrust surface compared to a conventional crankshaft so that a shortest outer diameter (D1) of the thrust surface is formed larger than a diameter (D2) of the circle connecting the centers of the balls.

In FIG. 16, a portion denoted by reference numeral 222a is an extended thrust surface compared to a conventional crankshaft.

According to this configuration, as the size of the thrust surface of the crankshaft provided in the reciprocating compressor according to embodiments is increased compared to that of the crankshaft provided in the reciprocating compressor according to the related art, the ball may rotate stably on the washer and a uniform force is applied to the ball so that imbalance of force does not occur

It is apparent to those skilled in the art that embodiments may be embodied in other specific forms without departing from the essential characteristics. Accordingly, the description should not be construed as restrictive in all respects but should be considered as illustrative. The invention is defined by the appended claims.

## Claims

1. A reciprocating compressor comprising:
an airtight container (1) in which an airtight space is formed;
a motor (100) having a stator (110) and a rotor (120) and installed inside of the airtight container (1) to generate rotational force; and
a compression unit (200) installed inside the airtight container (1) to compress refrigerant by the rotational force of the motor (100), wherein the compression unit (200) includes:
a crankshaft (220) having a shaft (221) coupled to the rotor (120) and inserted into a shaft hole (212) of a cylinder block (210), an eccentric mass (222) formed eccentrically at an end of the shaft (221), and a pin (223) that is formed eccentrically with respect to the shaft (221) on a surface of the eccentric mass (222) and rotates eccentrically about the shaft (221);
a connecting rod (230) rotatably coupled to the pin (223) to convert rotational motion into linear motion;
a piston (240) rotatably coupled to the connecting rod (230) and configured to compress the refrigerant while reciprocating in a straight line; and
a ball bearing (300) positioned between a thrust surface of the cylinder block (210) and a thrust surface of the crankshaft (220), wherein the ball bearing (300) includes:
a ball cage (310);
a plurality of balls (320) rotatably coupled to the ball cage (310); and
at least one washer (331, 332) positioned at least one of between the cylinder block (210) and the plurality of balls (320) and between the crankshaft (220) and the plurality of balls (320), and
a rotation preventing portion (340a, 340b, 340c, 350a, 350b) configured to limit rotation of the at least one washer (331, 332) with respect to the corresponding thrust
surface (213, 227) of the cylinder block (210) and/or the crankshaft (220); **characterized in that**:
the compressor has at least one of a width, depth, and height of 110 mm or less based on a size of the airtight container (1), and the crankshaft (220) includes an extended thrust surface (222a), and a shortest outer diameter of the thrust surface (222a, 227) of the crankshaft (220) is formed larger than a diameter of a circle connecting centers of the plurality of balls (320).

2. The reciprocating compressor of claim 1, wherein the at least one washer (331, 332) includes a lower washer (332) positioned between a thrust surface (213) of the cylinder block (210) and the plurality of balls (320).

3. The reciprocating compressor of claim 2, further comprising a bearing restraining portion (214) to which the lower washer (332) is coupled, the bearing restraining portion (214) is provided around the shaft hole (212) in the thrust surface (213) of the cylinder block (210).

4. The reciprocating compressor of any one of claims 1, 2 or 3, wherein the rotation preventing portion includes a lower washer rotation preventing portion (340a, 340b, 340c) configured to limit rotation of the lower washer (332) on the thrust surface (213) of the cylinder block (210).

5. The reciprocating compressor of claim 4, wherein the lower washer rotation preventing portion (340a) includes at least one straight line portion (340a1) formed on an outer circumferential surface of the lower washer (332) and at least one straight line portion (340a2) formed on an inner circumferential surface of the bearing restraining portion (214) and facing the at least one straight line portion (340a1) of the lower washer (332).

6. The reciprocating compressor of claim 5, wherein a remaining portion of the outer circumferential surface of the lower washer (332), except for the at least one straight line portion (340a1), is formed in a circular shape, and a remaining portion of the inner circumferential surface of the bearing restraining portion (214), except for the at least one straight line portion (340a2), is formed in a circular shape.

7. The reciprocating compressor of claim 4, wherein the lower washer rotation preventing portion (340b) includes a polygonal portion (340b1) formed on an outer circumferential surface of the lower washer (332) and a polygonal portion (340b2) formed on an inner circumferential surface of the bearing restraining portion (214) and coupled to the polygonal portion (340b1) of the lower washer (332).

8. The reciprocating compressor of claim 4, wherein the lower washer rotation preventing portion (340c) includes at least one protrusion (340c1) that protrudes from an outer circumferential surface of the lower washer (332) toward the bearing restraining portion (214), and at least one protrusion insertion groove (340c2) formed in the bearing restraining portion (214) and coupled to each of the at least one protrusions (340c1),
preferably the at least one protrusion (340c1) is fixed to the at least one protrusion insertion groove (340c2) by a pin (340c3) or a screw.

9. The reciprocating compressor of claim 8, wherein the at least one protrusion comprises a plurality of the protrusions (340c1) and the at least one protrusion insertion groove comprises a plurality of the protrusion insertion grooves (340c2), and wherein the plurality of the protrusions (340c1) and the plurality of the protrusion insertion grooves (340c2) are arranged at equal intervals.

10. The reciprocating compressor of any one of the preceding claims, wherein the at least one washer includes an upper washer (331) positioned between the crankshaft (220) and the plurality of balls (320).

11. The reciprocating compressor of claim 10, wherein the rotation preventing portion includes an upper washer rotation preventing portion (350a, 350b) configured to limit rotation of the upper washer (331) on the crankshaft (220).

12. The reciprocating compressor of claim 11, wherein the upper washer rotation preventing portion (350a) includes at least one straight line portion (350a1) formed on an inner circumferential surface of the upper washer (331) and at least one straight line portion (350a2) formed on an outer circumferential surface of the shaft (221) of the crankshaft (220) and facing the at least one straight line portion (350a1) of the upper washer (331).

13. The reciprocating compressor of claim 12, wherein a remaining portion of the inner circumferential surface of the upper washer (331), except for the at least one straight line portion (350al), is formed in a circular shape, and a remaining portion of the outer circumferential surface of the shaft (221) of the crankshaft (220), except for the at least one straight line portion (350a2), is formed in a circular shape.

14. The reciprocating compressor of any one of the claims 11, 12 or 13, wherein the upper washer rotation preventing portion (350b) includes a polygonal portion (350b1) formed on an inner circumferential surface of the upper washer (331) and a polygonal portion (350b2) formed on an outer circumferential surface of the shaft part (221) of the crankshaft (220) and facing the polygonal portion (350b1) of the upper washer (331).

## Patentansprüche

1. Hubkolbenverdichter, der Folgendes umfasst:
einen luftdichten Behälter (1), in dem ein luftdichter Raum ausgebildet ist;
einen Motor (100), der einen Stator (110) und einen Rotor (120) aufweist und im Inneren des luftdichten Behälters (1) installiert ist, um Drehkraft zu erzeugen; und
eine Verdichtereinheit (200), die im Inneren des luftdichten Behälters (1) installiert ist, um durch die Drehkraft des Motors (100) Kältemittel zu verdichten, wobei die Verdichtereinheit (200) Folgendes umfasst:
eine Kurbelwelle (220), die eine Welle (221), die an den Rotor (120) gekoppelt ist und in eine Wellenöffnung (212) eines Zylinderblocks (210) eingesetzt ist, eine exzentrische Masse (222), die an einem Ende der Welle (221) exzentrisch ausgebildet ist, und einen Stift (223), der bezüglich der Welle (221) auf einer Oberfläche der exzentrischen Masse (222) exzentrisch ausgebildet ist und sich um die Welle (221) exzentrisch dreht, aufweist;
einen Verbindungsstab (230), der an den Stift (223) drehbar gekoppelt ist, um Drehbewegung in lineare Bewegung umzuwandeln;
einen Kolben (240), der an den Verbindungsstab (230) drehbar gekoppelt ist und konfiguriert ist, das Kältemittel zu verdichten, während er sich in einer geraden Linie hin und her bewegt; und
ein Kugellager (300), das zwischen einer Anlauffläche des Zylinderblocks (210) und einer Anlauffläche der Kurbelwelle (220) positioniert ist, wobei das Kugellager (300) Folgendes umfasst:
einen Kugelkäfig (310);
mehrere Kugeln (320), die an den Kugelkäfig (310) drehbar gekoppelt sind; und
mindestens eine Unterlegscheibe (331, 332), die zwischen dem Zylinderblock (210) und den mehreren Kugeln (320) und/oder zwischen der Kurbelwelle (220) und den mehreren Kugeln (320) angeordnet ist, und
einen Drehverhinderungsabschnitt (340a, 340b, 340c, 350a, 350b), der konfiguriert ist, die Drehung der mindestens einen Unterlegscheibe (331, 332) bezüglich der entsprechenden Anlauffläche (213, 227) des Zylinderblocks (210) und/oder der Kurbelwelle (220) zu begrenzen;
**dadurch gekennzeichnet, dass**
der Verdichter basierend auf einer Größe des luftdichten Behälters (1) eine Breite, Tiefe und/oder Höhe von 110 mm oder weniger aufweist und die Kurbelwelle (220) eine verlängerte Anlauffläche (222a) aufweist und ein kürzester Außendurchmesser der Anlauffläche (222a, 2227) der Kurbelwelle (220) größer ausgebildet ist als ein Durchmesser eines Kreises, der die Mittelpunkte der mehreren Kugeln (320) verbindet.

2. Hubkolbenverdichter nach Anspruch 1, wobei die mindestens eine Unterlegscheibe (331, 332) eine untere Unterlegscheibe (332) umfasst, die zwischen eines Anlauffläche (213) des Zylinderblocks (210) und den mehreren Kugeln (320) angeordnet ist.

3. Hubkolbenverdichter nach Anspruch 2, der ferner einen Lagerhalteabschnitt (214) umfasst, an den die untere Unterlegscheibe (332) gekoppelt ist, wobei der Lagerhalteabschnitt (214) um die Wellenöffnung (212) herum in der Anlauffläche (213) des Zylinderblocks (210) vorgesehen ist.

4. Hubkolbenverdichter nach einem der Ansprüche 1, 2 oder 3, wobei der Drehverhinderungsabschnitt einen Drehverhinderungsabschnitt (340a, 340b, 340c) der unteren Unterlegscheibe umfasst, der konfiguriert ist, die Drehung der unteren Unterlegscheibe (332) auf der Anlauffläche (213) des Zylinderblocks (210) zu begrenzen.

5. Hubkolbenverdichter nach Anspruch 4, wobei der Drehverhinderungsabschnitt (340a) der unteren Unterlegscheibe mindestens einen geradlinigen Abschnitt (340a1), der an einer Außenumfangsfläche der unteren Unterlegscheibe (332) ausgebildet ist, und mindestens einen geradlinigen Abschnitt (340a2) umfasst, der an einer Innenumfangsfläche des Lagerhalteabschnitts (214) ausgebildet ist und dem mindestens einen geradlinigen Abschnitt (340a1) der unteren Unterlegscheibe (332) zugewandt ist.

6. Hubkolbenverdichter nach Anspruch 5, wobei ein verbleibender Abschnitt der Außenumfangsfläche der unteren Unterlegscheibe (332) mit Ausnahme des mindestens einen geradlinigen Abschnitts (340a1) kreisförmig ausgebildet ist und ein verbleibender Abschnitt der Innenumfangsfläche des Lagerhalteabschnitts (214) mit Ausnahme des mindestens einen geradlinigen Abschnitts (340a2) kreisförmig ausgebildet ist.

7. Hubkolbenverdichter nach Anspruch 4, wobei der Drehverhinderungsabschnitt (340b) der unteren Unterlegscheibe einen polygonalen Abschnitt (340b1), der an einer Außenumfangsfläche der unteren Unterlegscheibe (332) ausgebildet ist, und einen polygonalen Abschnitt (340b2), der an einer Innenumfangsfläche des Lagerhalteabschnitts (214) ausgebildet ist und an den polygonalen Abschnitt (340b1) der unteren Unterlegscheibe (332) gekoppelt ist, umfasst.

8. Hubkolbenverdichter nach Anspruch 4, wobei der Drehverhinderungsabschnitt (340c) der unteren Unterlegscheibe mindestens einen Vorsprung (340c1), der von einer Außenumfangsfläche der unteren Unterlegscheibe (332) zu dem Lagerhalteabschnitt (214) hin vorspringt, und mindestens eine Vorsprungseinführnut (340c2), die in dem Lagerhalteabschnitt (214) ausgebildet ist und an jeden des mindestens einen Vorsprungs (340c1) gekoppelt ist, umfasst,
wobei der mindestens eine Vorsprung (340c1) vorzugsweise durch einen Stift (340c3) oder eine Schraube an der mindestens einen Vorsprungseinführnut (340c2) befestigt ist.

9. Hubkolbenverdichter nach Anspruch 8, wobei der mindestens eine Vorsprung mehrere Vorsprünge (340c1) umfasst und die mindestens eine Vorsprungseinführnut mehrere Vorsprungseinführnuten (340c2) umfasst und wobei die mehreren Vorsprünge (340c1) und die mehreren Vorsprungseinführnuten (340c2) in gleichen Abständen angeordnet sind.

10. Hubkolbenverdichter nach einem der vorhergehenden Ansprüche, wobei die mindestens eine Unterlegscheibe eine obere Unterlegscheibe (331) umfasst, die zwischen der Kurbelwelle (220) und den mehreren Kugeln (320) angeordnet ist.

11. Hubkolbenverdichter nach Anspruch 10, wobei der Drehverhinderungsabschnitt einen Drehverhinderungsabschnitt (350a, 350b) der oberen Unterlegscheibe umfasst, der konfiguriert ist, die Drehung der oberen Unterlegscheibe (331) auf der Kurbelwelle (220) zu begrenzen.

12. Hubkolbenverdichter nach Anspruch 11, wobei der Drehverhinderungsabschnitt (350a) der oberen Unterlegscheibe mindestens einen geradlinigen Abschnitt (350a1), der an einer Innenumfangsfläche der oberen Unterlegscheibe (331) ausgebildet ist, und mindestens einen geradlinigen Abschnitt (350a2), der an einer Außenumfangsfläche der Welle (221) der Kurbelwelle (220) ausgebildet ist und dem mindestens einen geradlinigen Abschnitt (350a1) der oberen Unterlegscheibe (331) zugewandt ist, umfasst.

13. Hubkolbenverdichter nach Anspruch 12, wobei ein verbleibender Abschnitt der Innenumfangsfläche der oberen Unterlegscheibe (331) mit Ausnahme des mindestens einen geradlinigen Abschnitts (350a1) kreisförmig ausgebildet ist und eine verbleibender Abschnitt der Außenumfangsfläche der Welle (221) der Kurbelwelle (220) mit Ausnahme des mindestens einen geradlinigen Abschnitts (350a2) kreisförmig ausgebildet ist.

14. Hubkolbenverdichter nach einem der Ansprüche 11, 12 oder 13, wobei der Drehverhinderungsabschnitt (350b) der oberen Unterlegscheibe einen polygonalen Abschnitt (350b1), der an einer Innenumfangsfläche der oberen Unterlegscheibe (331) ausgebildet ist, und einen polygonalen Abschnitt (350b2), der an einer Außenumfangsfläche des Wellenteils (221) der Kurbelwelle (220) ausgebildet ist und dem polygonalen Abschnitt (350b1) der oberen Unterlegscheibe (331) zugewandt ist, umfasst.

## Revendications

1. Compresseur alternatif comportant :
un contenant étanche à l'air (1) dans lequel un espace étanche à l'air est formé ;
un moteur (100) ayant un stator (110) et un rotor (120) et installé à l'intérieur du contenant étanche à l'air (1) pour générer une force de rotation ; et
une unité de compression (200) installée à l'intérieur du contenant étanche à l'air (1) pour comprimer du fluide frigorigène par la force de rotation du moteur (100), dans lequel l'unité de compression (200) inclut :
un vilebrequin (220) ayant un arbre (221) couplé au rotor (120) et inséré dans un trou d'arbre (212) d'un bloc-cylindre (210), une masse excentrée (222) formée de manière excentrée à une extrémité de l'arbre (221), et un tourillon (223) qui est formée de manière excentrée rapport à l'arbre (221) sur une surface de la masse excentrée (222) et tournant de manière excentrée autour de l'arbre (221) ;
une bielle (230) couplée en rotation au tourillon (223) pour convertir un mouvement de rotation en mouvement linéaire ;
un piston (240) couplé en rotation à la bielle (230) et configuré pour comprimer le fluide frigorigène tout en réalisant un mouvement de va-et-vient en ligne droite ; et
un palier à billes (300) positionné entre une surface de poussée du bloc-cylindre (210) et une surface de poussée du vilebrequin (220), dans lequel le palier à billes (300) inclut :
une cage à billes (310) ;
une pluralité de billes (320) couplées en rotation à la cage à billes (310) ; et
au moins une rondelle (331, 332) positionnée à au moins un emplacement entre le bloc-cylindre (210) et la pluralité de billes (320) et entre le vilebrequin (220) et la pluralité de billes (320), et
une partie de prévention de rotation (340a, 340b, 340c, 350a, 350b) configurée pour limiter une rotation de la au moins une rondelle (331, 332) par rapport à la surface de poussée (213, 227) correspondante du bloc-cylindre (210) et/ou du vilebrequin (220) ;
**caractérisé en ce que** :
le compresseur a au moins une dimension parmi une largeur, une profondeur et une hauteur de 110 mm ou moins basée sur la taille du contenant étanche à l'air (1), et le vilebrequin (220) inclut une surface de poussée étendue (222a), et un diamètre extérieur le plus court de la surface de poussée (222a, 227) du vilebrequin (220) est formé plus grand qu'un diamètre d'un cercle reliant des centres de la pluralité de billes (320).

2. Compresseur alternatif selon la revendication 1, dans lequel la au moins une rondelle (331, 332) inclut une rondelle inférieure (332) positionnée entre une surface de poussée (213) du bloc-cylindre (210) et la pluralité de billes (320).

3. Compresseur alternatif selon la revendication 2, comportant en outre une partie de retenue de palier (214) à laquelle la rondelle inférieure (332) est couplée, la partie de retenue de palier (214) étant agencée autour du trou d'arbre (212) dans la surface de poussée (213) du bloc-cylindre (210).

4. Compresseur alternatif selon l'une quelconque des revendications 1, 2 ou 3, dans lequel la partie de prévention de rotation inclut une partie de prévention de rotation de rondelle inférieure (340a, 340b, 340c) configurée pour limiter une rotation de la rondelle inférieure (332) sur la surface de poussée (213) du bloc-cylindre (210).

5. Compresseur alternatif selon la revendication 4, dans lequel la partie de prévention de rotation de rondelle inférieure (340a) inclut au moins une partie rectiligne (340a1) formée sur une surface circonférentielle extérieure de la rondelle inférieure (332) et au moins une partie rectiligne (340a2) formée sur une surface circonférentielle intérieure de la partie de retenue de palier (214) et dirigée vers la au moins une partie rectiligne (340a1) de la rondelle inférieure (332).

6. Compresseur alternatif selon la revendication 5, dans lequel une partie restante de la surface circonférentielle extérieure de la rondelle inférieure (332), à l'exception de la au moins une partie rectiligne (340a1), est formée avec une forme circulaire, et une partie restante de la surface circonférentielle intérieure de la partie de retenue de palier (214), à l'exception de la au moins une partie rectiligne (340a2), est formée avec une forme circulaire.

7. Compresseur alternatif selon la revendication 4, dans lequel la partie de prévention de rotation de rondelle inférieure (340b) inclut une partie polygonale (340b1) formée sur une surface circonférentielle extérieure de la rondelle inférieure (332) et une partie polygonale (340b2) formée sur une surface circonférentielle intérieure de la partie de retenue de palier (214) et couplée à la partie polygonale (340b1) de la rondelle inférieure (332).

8. Compresseur alternatif selon la revendication 4, dans lequel la partie de prévention de rotation de rondelle inférieure (340c) inclut au moins une saillie (340c1) qui fait saillie à partir d'une surface circonférentielle extérieure de la rondelle inférieure (332) vers la partie de retenue de palier (214), et au moins une rainure d'insertion de saillie (340c2) formée dans la partie de retenue de palier (214) et couplée à chacune des au moins une saillie (340c1),
de préférence, la au moins une saillie (340c1) est fixée à la au moins une rainure d'insertion de saillie (340c2) par une goupille (340c3) ou une vis.

9. Compresseur alternatif selon la revendication 8, dans lequel la au moins une saillie comporte une pluralité des saillies (340c1) et la au moins une rainure d'insertion de saillie comporte une pluralité des rainures d'insertion de saillie (340c2), et dans lequel la pluralité des saillies (340c1) et la pluralité des rainures d'insertion de saillie (340c2) sont agencées à des intervalles égaux.

10. Compresseur alternatif selon l'une quelconque des revendications précédentes, dans lequel la au moins une rondelle inclut une rondelle supérieure (331) positionnée entre le vilebrequin (220) et la pluralité de billes (320).

11. Compresseur alternatif selon la revendication 10, dans lequel la partie de prévention de rotation inclut une partie de prévention de rotation de rondelle supérieure (350a, 350b) configurée pour limiter une rotation de la rondelle supérieure (331) sur le vilebrequin (220).

12. Compresseur alternatif selon la revendication 11, dans lequel la partie de prévention de rotation de rondelle supérieure (350a) inclut au moins une partie rectiligne (350a1) formée sur une surface circonférentielle intérieure de la rondelle supérieure (331) et au moins une partie rectiligne (350a2) formée sur une surface circonférentielle extérieure de l'arbre (221) du vilebrequin (220) et dirigée vers la au moins une partie rectiligne (350a1) de la rondelle supérieure (331).

13. Compresseur alternatif selon la revendication 12, dans lequel une partie restante de la surface circonférentielle intérieure de la rondelle supérieure (331), à l'exception de la au moins une partie rectiligne (350a1), est formée avec une forme circulaire, et une partie restante de la surface circonférentielle extérieure de l'arbre (221) du vilebrequin (220), à l'exception de la au moins une partie rectiligne (350a2), est formée avec une forme circulaire.

14. Compresseur alternatif selon l'une quelconque des revendications 11, 12 ou 13, dans lequel la partie de prévention de rotation de rondelle supérieure (350b) inclut une partie polygonale (350b1) formée sur une surface circonférentielle intérieure de la rondelle supérieure (331) et une partie polygonale (350b2) formée sur une surface circonférentielle extérieure de la partie d'arbre (221) du vilebrequin (220) et dirigée vers la partie polygonale (350b1) de la rondelle supérieure (331).
